# EUROPEAN PATENT SPECIFICATION

(11) **EP 2 938 232 B1**
(45) Date of publication and mention of the grant of the patent: **07.12.2016**
(21) Application number: 12810309.0
(22) Date of filing: 27.12.2012
(51) Int. Cl.: A47J 31/10

(54) **FULLY AUTOMATED TEA PREPERATION APPARATUS WITH ADVANCED CONTROL**
VOLLAUTOMATISCHE TEEZUBEREITUNGSVORRICHTUNG MIT ERWEITERTEN STEUERUNG
APPAREIL DE PRÉPARATION DE THÉ ENTIÈREMENT AUTOMATIQUE À COMMANDE AVANCÉE

(43) Date of publication of application: 04.11.2015
(73) Proprietor: Arçelik Anonim Sirketi, 34950 Istanbul (TR)
(72) Inventor: COBAN, Omer Burak, 34950 Istanbul (TR); DAVASLIGIL, Sena, 34950 Istanbul (TR); GERZELI, Ismail, 34950 Istanbul (TR); VATANSEVER, Celal, 34950 Istanbul (TR); HASANREISOGLU, Ali Levent, 34950 Istanbul (TR)
(86) International application number: PCT/EP2012/076922
(87) International publication number: WO 2014/101939

(56) References cited:
- DE-A1- 2 410 620
- US-A- 3 442 199
- US-A- 3 552 298
- US-A1- 2004 226 452
- US-A1- 2008 314 255

## Description

The present invention pertains to a tea preparation apparatus and more specifically a fully automated tea preparation apparatus in which separate containment means for accommodating boiled water, herbal leaves and brewed herbal content are preserved in a vertically arranged configuration according to which each containment means is placed one above another.

Tea is traditionally consumed on a daily basis in large quantities in the country of the applicant. A good flavor tea is believed to be prepared by way of boiling water in a first container and steeping tea leaves in hot water in a second container. In other words, water is heated in a receptacle by means of heating elements and brewing is carried out in a separate receptacle by means of subjecting dry tea leaves to heated water. Beverages with different aromas from other herbal ingredients can also be easily prepared in line with this known approach.

A common problem of automated tea preparing apparatus is that they provide only a limited automation by which water is boiled in a first container and then kept warm therein as long as preferred to allow brewing of tea leaves in a second top container. Therefore, to complete brewing, the user himself must add water to the top container from the boiling receptacle; which means a step which is merely user dependent to the extent that in the absence of user intervention, the whole tea preparing process is aborted, is in question.

In the prior art, electrical beverage preparation apparatus generally comprise a receptacle where water is heated and a brewer provided separately from said receptacle, having optionally tea/coffee or otherwise herbal ingredients placed therein. Electrical hot beverage preparation apparatus comprise a variety of brewing receptacle structures including apparatuses where water is introduced to the brewer by means of a pump without the intervention of the user.

However, it is a common occurrence that tea/coffee or otherwise herbal ingredients provided in brewers continue to brew until it is consumed and the beverage becomes more and more condensed. As the liquid content within the brewer decreases, available dry tea leaves and other possible herbal ingredients are filtered more into the served beverage over time and their taste turn into a bitter one due to the effect of hot water. Moreover, dry tea leaves and undesired residues pass into the served beverage.

In the prior art, hot beverage preparation devices comprising a plurality of brewers aiming at avoiding the above-referred inconvenience are available. Among others, the US publication US2008314255 A1 discloses a coffee or tea maker with an operation cup and a thermal carafe in the form of separate containment means. The coffee or tea maker automatically heats the water, supplies the water into the operation cup to make coffee or tea and stores the coffee or tea in the thermal carafe without extra help from the users, typically by a transfer means. The most prominent disadvantage of the apparatus of US2008314255 lies in that it involves an extensively complex structure in terms of manufacturing on the part of manufacturers and in terms of usability on the part of users. The present invention on the other hand adopts a far less complex and compact structure where a plurality of receptacles is conveniently placed one above the other. This is desirable on the part of users also for its advantages in terms of occupied space both in use and storage. Further, users have a greater tendency to use vertically arranged tea preparation apparatus for its similarities to conventional non-electrical arrangements

Further, despite the fact that US2008314255 may prove an appropriate use for preparing coffee, it is certainly not suitable for preparing tea as discussed below.

The teaching of US2008314255 does not allow softening of the herbal beverage by addition of hot water because water in the main container is fully released during the brewing operation. However, it is extremely common that different people enjoy tea in different tastes, i.e. different levels of herbal content condensation, which is primarily dependent upon parameters such as the amount of the content and the time duration brewing action takes place, such parameters being regulated prior to the brewing action. However, after the brewed tea is ready for service, it is still possible to soften its taste by adding hot water as is conventionally practiced. Indeed, in practice, the level of condensation or so to say the bitterness of tea is regulated by most people only after the brewing action actually takes place, by way of adding hot water.

Primary object of the present invention is to provide an electrical tea preparation apparatus which is fully automated to the extent that it can carry out both boiling and brewing operations without user intervention.

The present invention proposes a tea preparation apparatus having a first containment means suitable for boiling water, a second containment means for brewing purposes, containing plant leaves to be brewed and a third containment means for service purposes into which brewed herbal beverage is transferred from said second containment means by means of a pump.

In the tea preparation apparatus of the invention, the second containment means is slidably positioned immediately below said first containment means. Said first and second containment means are in communication by means of a valve establishing fluid communication thereinbetween in response to a control signal by an electronic control unit. Said third containment means is placed on top of said first containment means in a removable manner. Further, said first containment means being also removable provides that it can be individually used for serving hot water.

Said first containment means has electrical resistances at its base. This ensures that hot water is available even after boiled water is transferred to said second containment means. It is ensured that water in said first containment means is kept warm by means of a lower wattage resistance or by way of controlling power transferred to said resistance.

Said three containment means form a one above the other configuration. In other words said first containment means carries said third containment means and the body of the apparatus with its base portion carries both of said first and third containment means. Said base portion comprises a slot for receiving said second containment means. Said second containment means comprises within its inner volume a wire mesh filter for storing herbal leaves. The base of said third containment means covering the upper end of said first containment means provides that said third containment means can be kept warm by the heat energy accumulated in said first containment means.

An evacuation conduit is used to take brewed tea to said third containment means. It has an open end from which tea is poured to said third containment means. The conduit extends longitudinally in parallel with the containment means, which are placed one above the other.

The conduit's open end is concealed in a body portion of the apparatus such that it is not directly accessible from outside, which might otherwise cause burn hazards.

Said electronic control unit oversees the temperature and amount of water to be introduced to the second containment means. It also initiates pumping action upon termination of a certain time duration, which is indicative of the degree of infusion.

Accompanying drawings are given solely for the purpose of exemplifying a fully automated tea preparation apparatus whose advantages over prior art were outlined above and will be explained in brief hereinafter. The drawings are not meant to delimit the scope of protection as identified in the claims nor should they be referred to alone in an effort to interpret the scope identified in said claims without recourse to the technical disclosure in the description of the present invention.
Fig. 1 demonstrates a front perspective view of the tea preparation apparatus according to the present invention.

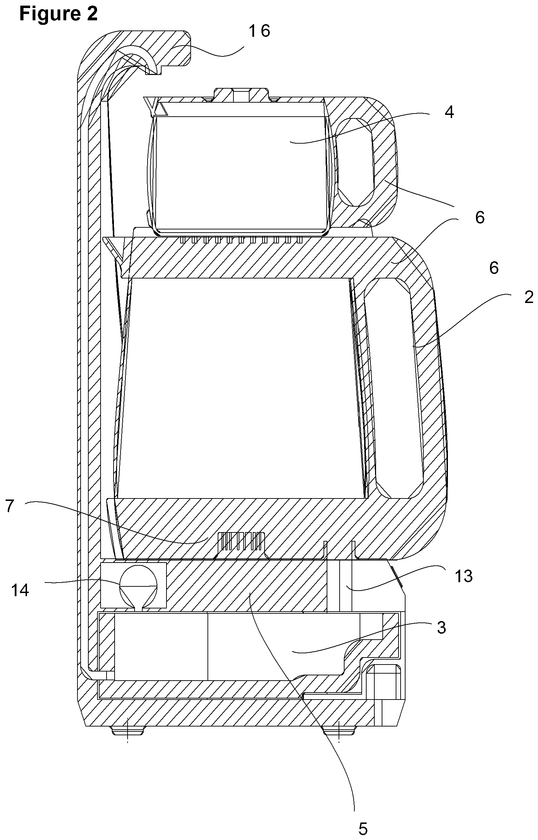

Fig. 2 demonstrates a longitudinal cross-sectional view of the tea preparation apparatus according to the present invention.

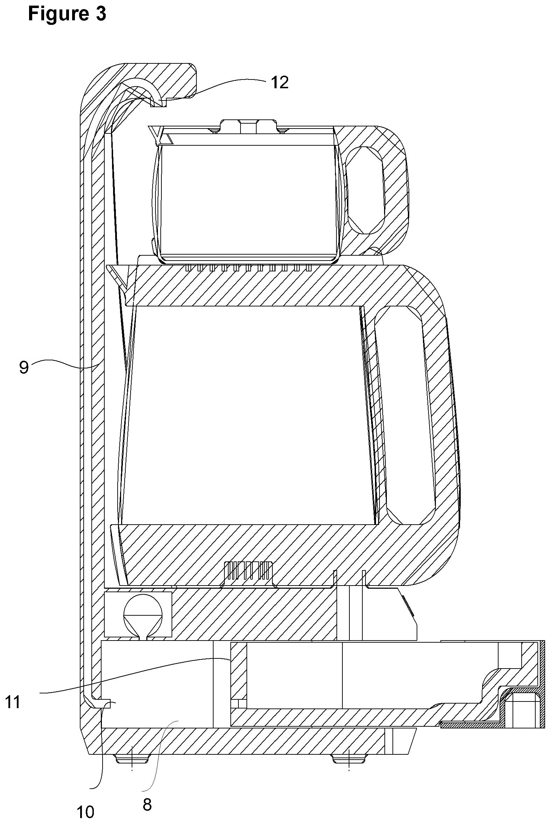

Fig. 3 demonstrates a longitudinal cross-sectional view of the tea preparation apparatus according to the present invention while the brewing containment means is being removed.

Referring now to the figures outlined above, the present invention proposes a tea preparation apparatus for preparing tea in a traditional manner, i.e. by way of using separate brewing and boiling receptacles.

The following numerals are assigned to different parts demonstrated in the drawings:
- 1.: Tea preparation apparatus
- 2.: First containment means
- 3.: Second containment means
- 4.: Third containment means
- 5.: Electrical heating means
- 6.: Handle
- 7.: Electrical adaptor
- 8.: Brewing slot
- 9.: Evacuation conduit
- 10.: Intake orifice
- 11.: Evacuation outlet
- 12.: Evacuation vent
- 13.: Valve
- 14.: Transfer means
- 15.: Evacuation conduit housing
- 16.: Flange portion

The tea preparation apparatus (1) of the invention features a first containment means (2) for boiling water, a second containment means (3) containing tea plant leaves to be brewed and a third containment means (4) into which brewed herbal beverage is then transferred. Said third containment means (4) is placed on top of said first containment means (2) in a removable manner. Said first containment means (2) is also removably arranged such that it can separately serve hot water. Said containment means (2, 3 and 4) are therefore removably disposed such that each one can individually be taken out for cleaning purposes or for serving on table. The second containment means (3), however, is not designed as a service means but as a refillable receptacle containing herbal ingredients.

In a nutshell, the present invention proposes a tea preparation apparatus (1) comprising a first containment means (2) to boil water, a second containment means (3) placeable underneath said first containment means (2) to establish a fluid passage thereinbetween and a third containment means (4) placeable on top of said first containment means (2) in thermal communication therewith. This configuration provides that boiled water is conveniently used for brewing purposes in said second containment means (3) and for storage purposes in a further third containment means (4).

The heating arrangement of the tea preparation apparatus comprises an electrical heating means (5) in the form of ohmic resistances involving active power dissipation. Said first containment means (2) incorporates said electrical heating means (5). Said electrical heating means (5) effects boiling of water contained therein.

Said second containment means (3) comprises a transfer means (4) transferring fluid content from said second containment means (3) to said third containment means (4) by means of an evacuation conduit (9). Transfer of the brewed beverage content into a further receptacle, namely said third containment means (4) provides that brewed tea is not served with its taste turned into a bitter one over time due to hot water.

Said first and third containment means (2, 4) are put one above another to allow thermal communication such that heat energy radiated from heat sources in connection with said first containment means (2) and accumulated therein also reaches said third containment means (4). The base of said third containment means (4) therefore covers the upper end of said first containment means (2). This configuration is effective in maintaining temperature of said third containment means (4) within recommended values.

Said three containment means (2, 3 and 4) form a vertically stacked configuration with respect to the ground. This provides the advantage that the tea preparation apparatus (1) is more convenient in terms of user-friendliness with its more compact and less complex structure as well as resemblance to conventional non-electrical tea kettles.

Said second containment means (3) comprising a filtering means for storing herbal ingredients provides that tea leaves are kept in hot water but they are not freely miscible in water so that brewing operation can be intercepted at some point overseen by said electronic control unit by way of transferring already brewed content.

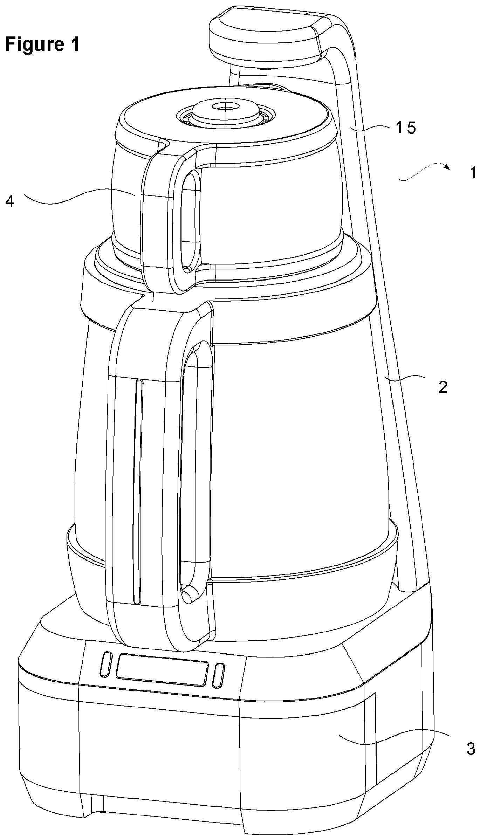

Referring now to Fig. 1, each of said first and third containment means (2, 4) according to the present invention comprises a handle (6) joined to the bodies thereof. Upon reaching of a certain predetermined temperature in said first containment means (2), a valve (13) provides fluid communication with said second containment means (3). Said valve (13) may be a valve of any type known to the person skilled in the art such as an electromagnetic valve. Said valve (13) provides that boiled water is transferred to said second containment means (3) where brewing operation is undertaken.

The duration said valve (13) is kept on, therefore the amount of hot water to be allowed into said second containment means (3), is overseen by said electronic control unit. Said electronic control unit is in communication with said valve (13), said electrical heating means (5), said transfer means (14) and a plurality of sensors. Said control unit then activates said transfer means (i.e. pump, 14) initiate pumping action allowing transfer of the brewed tea to said third containment means (4).

When a predefined amount of heated water is introduced into said second containment means (3), where herbal ingredients are stored, for the reason that the time duration tea leaves are infused in heated water makes a difference with caffeine strength, infusion is allowed for a user adjustable period, among predefined options.

When said second containment means (3) is appropriately positioned in a brewing slot (8), a fluid communication is established between an evacuation conduit (9) intake orifice (10) and an evacuation outlet (11) of said second containment means (3). Said second containment means (3) being slidable into said brewing slot (8) provides that sealing of said containment means (3) is ensured in locked position. Fluid communication between said intake orifice (10) and said evacuation outlet (11) is therefore established in locked position upon which transfer of brewed beverage content from said second containment means (3) to said third containment means (4) can be undertaken in a secure manner.

Said evacuation conduit (9) further provides that brewed tea is poured out of an evacuation vent (12) down to said third containment means (3). Said evacuation conduit's (9) evacuation vent (12) out of which fluid content is pourable down to said third containment means (4) provides that transfer of the brewed beverage into said third containment means (4) is accomplished in an automated and secure manner without user intervention.

Said evacuation conduit (9) extends within an evacuation conduit housing (15) parallel to the longitudinal axis of said containment means (2, 3 and 4) disposed in stacked configuration. Said evacuation conduit (9) being secured within said housing (15) ensures that it is not accessible from outside. Further, said evacuation conduit housing (15) comprises a flange portion (16) in which said evacuation vent (12) is disposed at a position distanced from the outermost end of said flange portion (16). This constitutes a further safety measure, notably aimed at providing a physical distance from the source of hot beverage content.

The first containment means (2) according to the present invention is connected to an electrical adaptor (7) in connection with the mains.

The temperature in the first containment means (2) may be controlled by means of a plurality of control arrangements and sensors. For instance, a steam switch may be used to this effect. Also, different control schemes to allow continuous or discontinuous powering of said electrical heating means (5) can be applied such that effective power consumption by the same is lowered upon boiling. Elements for dry boil protection and arrangements whereby the thermal control is designed to latch in an open state until the apparatus has cooled sufficiently for it to be reset can be provided. Finally, appropriate positioning of said second containment means (3) is also verified by said control unit through a position switch upon which the pumping action is initiated.

Said first containment means (2) is a boiling receptacle where water is boiled, said second containment means (3) is a brewing receptacle where infusion with tea plant leaves is provided and said third containment means (4) is a service receptacle where brewed tea is stored.

## Claims

1. A tea preparation apparatus (1) comprising a first containment means (2) to boil water, a second containment means (3) placeable underneath said first containment means (2) to establish a fluid passage thereinbetween and a third containment means (4) placeable on top of said first containment means (2) in thermal communication therewith, said first containment means (2) having electrical heating means (5) **characterized in that** said second containment means (3) comprises a transfer means (14) initiating transfer of fluid content from said second containment means (3) to said third containment means (4), said transfer means (14) being in communication with an evacuation conduit (9), the latter effecting transfer of fluid content therethrough.

2. A tea preparation apparatus (1) as set forth in Claim 1 wherein said three containment means (2, 3 and 4) form a vertically stacked configuration with respect to the ground.

3. A tea preparation apparatus (1) as set forth in Claim 1 or 2 wherein said second containment means (3) comprises a filtering means for storing herbal ingredients.

4. A tea preparation apparatus (1) as set forth in Claim 1, 2 or 3 wherein base of said third containment means (4) covers the upper open end of said first containment means (2).

5. A tea preparation apparatus (1) as set forth in Claim 1 or 4 wherein said first containment means (2) comprises a valve (13) establishing fluid communication with said second containment means (3).

6. A tea preparation apparatus (1) set forth in Claim 2 or 5 wherein said evacuation conduit (9) comprises an evacuation vent (12) out of which fluid content is pourable down to said third containment means (4).

7. A tea preparation apparatus (1) as set forth in Claim 1 wherein said transfer means (14) is an air or water pump.

8. A tea preparation apparatus (1) as set forth in Claim 2 or 6 wherein said evacuation conduit (9) extends within an evacuation conduit housing (15) parallel to the longitudinal axis of said containment means (2, 3 and 4) disposed in stacked configuration.

9. A tea preparation apparatus (1) as set forth in Claim 8 wherein said evacuation conduit housing (15) comprises a flange portion (16) in which said evacuation vent (12) is disposed at a position distanced from the outermost end of said flange portion (16).

10. A tea preparation apparatus (1) as set forth in any of previous claims wherein said tea preparation apparatus (11) comprises an electronic control unit in communication with said valve (13), said electrical heating means (5) and said transfer means (14).

11. A tea preparation apparatus (1) as set forth in Claim 1 or 10 wherein said containment means (2, 3 and 4) are removably disposed.

12. A tea preparation apparatus (1) as set forth in Claim 11 wherein said second containment means (3) is slidable into a brewing slot (8) arranged under said first containment means (2) such that said third containment means (3) is sealed in locked position in said brewing slot (8).

13. A tea preparation apparatus (1) as set forth in any previous claims wherein said first containment means (2) is a boiling receptacle where water is boiled, said second containment means (3) is a brewing receptacle where infusion with tea plant leaves is provided and said third containment means (4) is a service receptacle where brewed tea is stored.

## Patentansprüche

1. Teezubereitungsvorrichtung (1), umfassend ein erstes Rückhaltemittel (2) zum Kochen von Wasser, ein zweites Rückhaltemittel (3), das unter dem ersten Rückhaltemittel (2) angeordnet werden kann, um einen Fluiddurchlass dazwischen herzustellen, und ein drittes Rückhaltemittel (4), das auf dem ersten Rückhaltemittel (2) in Wärmeverbindung damit angeordnet werden kann, wobei das erste Rückhaltemittel (2) ein elektrisches Heizmittel (5) aufweist, **dadurch gekennzeichnet, dass** das zweite Rückhaltemittel (3) ein Übertragungsmittel (14) umfasst, das die Übertragung von Fluidinhalt von dem zweiten Rückhaltemittel (3) an das dritte Rückhaltemittel (4) einleitet, wobei das Übertragungsmittel (14) mit einer Entleerungsleitung (9) in Verbindung steht, welche eine Übertragung des Fluidinhalts dadurch bewirkt.

2. Teezubereitungsvorrichtung (1) nach Anspruch 1, wobei die drei Rückhaltemittel (2, 3 und 4) in Bezug auf den Boden eine vertikal gestapelte Konfiguration bilden.

3. Teezubereitungsvorrichtung (1) nach Anspruch 1 oder 2, wobei das zweite Rückhaltemittel (3) ein Filtermittel zum Aufbewahren von Kräuterinhaltsstoffen umfasst.

4. Teezubereitungsvorrichtung (1) nach Anspruch 1, 2 oder 3, wobei eine Basis des dritten Rückhaltemittels (4) das obere offene Ende des ersten Rückhaltemittels (2) abdeckt.

5. Teezubereitungsvorrichtung (1) nach Anspruch 1 oder 4, wobei das erste Rückhaltemittel (2) ein Ventil (13) umfasst, das Fluidverbindung mit dem zweiten Rückhaltemittel (3) herstellt.

6. Teezubereitungsvorrichtung (1) nach Anspruch 2 oder 5, wobei die Entleerungsleitung (9) einen Entleerungsauslass (12) umfasst, aus dem der Fluidinhalt in das dritte Rückhaltemittel (4) gegossen werden kann.

7. Teezubereitungsvorrichtung (1) nach Anspruch 1, wobei das Übertragungsmittel (14) eine Luft- oder Wasserpumpe ist.

8. Teezubereitungsvorrichtung (1) nach Anspruch 2 oder 6, wobei sich die Entleerungsleitung (9) in einem Entleerungsleitungsgehäuse (15) parallel zur Längsachse der Rückhaltemittel (2, 3 und 4) erstreckt, die in gestapelter Konfiguration angeordnet sind.

9. Teezubereitungsvorrichtung (1) nach Anspruch 8, wobei das Entleerungsleitungsgehäuse (15) einen Flanschabschnitt (16) umfasst, in dem der Entleerungsauslass (12) an einer Position entfernt von dem äußersten Ende des Flanschabschnitts (16) angeordnet ist.

10. Teezubereitungsvorrichtung (1) nach einem der vorangehenden Ansprüche, wobei die Teezubereitungsvorrichtung (11) eine elektronische Steuereinheit in Kommunikation mit dem Ventil (13), dem elektrischen Heizmittel (5) und dem Übertragungsmittel (14) umfasst.

11. Teezubereitungsvorrichtung (1) nach Anspruch 1 oder 10, wobei die Rückhaltemittel (2, 3 und 4) lösbar angeordnet sind.

12. Teezubereitungsvorrichtung (1) nach Anspruch 11, wobei das zweite Rückhaltemittel (3) in einen Brühschlitz (8) geschoben werden kann, der unter dem ersten Rückhaltemittel (2) vorgesehen ist, derart, dass das dritte Rückhaltemittel (3) in dem Brühschlitz (8) in verriegelter Position verschlossen wird.

13. Teezubereitungsvorrichtung (1) nach einem der vorangehenden Ansprüche, wobei das erste Rückhaltemittel (2) ein Siedebehälter ist, in dem Wasser gekocht wird, das zwei Rückhaltemittel (3) ein Brühbehälter ist, in dem eine Infusion mit Teepflanzenblättern vorgesehen ist, und das dritte Rückhaltemittel (4) ein Servierbehälter ist, in dem gebrühter Tee gelagert wird.

## Revendications

1. Un appareil de préparation de thé (1) comprenant un premier moyen de confinement (2) pour faire bouillir l'eau, un deuxième moyen de confinement (3) qui est disposé sous ledit premier moyen de confinement (2) pour établir un passage de fluide entre eux et un troisième moyen de confinement (4) qui est disposé au-dessus dudit premier moyen de confinement (2) en communication thermique avec celui-ci, ledit premier moyen de confinement (2) présentant des moyens de chauffage électrique (5), **caractérisé en ce que** ledit deuxième moyen de confinement (3) comprend un moyen de transfert (14) qui commence le transfert du fluide à partir dudit deuxième moyen de confinement (3) audit troisième moyen de confinement (4), ledit moyen de transfert (14) étant en communication avec un conduit d'évacuation (9), ce dernier effectuant le transfert du fluide à travers celui-ci.

2. Un appareil de préparation de thé (1) selon la Revendication 1 où lesdits trois moyens de confinement (2, 3 et 4) forment une configuration empilée verticalement par rapport au sol.

3. Un appareil de préparation de thé (1) selon la Revendication 1 ou 2 où ledit deuxième moyen de confinement (3) comprend un moyen de filtration pour stocker des ingrédients à base de plantes.

4. Un appareil de préparation de thé (1) selon la Revendication 1, 2 ou 3 où la base dudit troisième moyen de confinement (4) recouvre l'extrémité supérieure ouverte dudit premier moyen de confinement (2).

5. Un appareil de préparation de thé (1) selon la Revendication 1 ou 4 où ledit premier moyen de confinement (2) comprend une soupape (13) qui établit une communication de fluide avec ledit deuxième moyen de confinement (3).

6. Un appareil de préparation de thé (1) selon la Revendication 2 ou 5 où ledit conduit d'évacuation (9) comprend un évent d'évacuation (12) par lequel le fluide peut être versé dans ledit troisième moyen de confinement (4).

7. Un appareil de préparation de thé (1) selon la Revendication 1 où ledit moyen de transfert (14) est une pompe d'air ou d'eau.

8. Un appareil de préparation de thé (1) selon la Revendication 2 ou 6 où ledit conduit d'évacuation (9) s'étend dans un logement du conduit d'évacuation (15) parallèle à l'axe longitudinal desdits moyens de confinement (2, 3 et 4) disposés dans une configuration empilée.

9. Un appareil de préparation de thé (1) selon la Revendication 8 où ledit conduit d'évacuation (15) comprend une partie de bride (16) dans laquelle ledit évent d'évacuation (12) est disposé à une position éloignée de l'extrémité la plus extérieure de ladite partie de bride (16).

10. Un appareil de préparation de thé (1) selon l'une quelconque des revendications précédentes où l'appareil de préparation de thé (11) comprend une unité de commande électronique en communication avec ladite soupape (13), lesdits moyens de chauffage électrique (5) et ledit moyen de transfert (14).

11. Un appareil de préparation de thé (1) selon la Revendication 1 ou 10 où lesdits moyens de confinement (2, 3 et 4) sont disposés de manière détachable.

12. Un appareil de préparation de thé (1) selon la Revendication 11 où ledit deuxième moyen de confinement (3) peut coulisser dans une fente d'infusion (8) qui est disposée sous ledit premier moyen de confinement (2) de telle sorte que ledit troisième moyen de confinement (3) est rendu étanche en position verrouillée dans ladite fente d'infusion (8).

13. Un appareil de préparation de thé (1) selon l'une quelconque des revendications précédentes où ledit premier moyen de confinement (2) est un récipient d'ébullition, ledit deuxième moyen de confinement (3) est un récipient d'infusion où l'infusion de feuilles de théier est réalisée et ledit troisième moyen de confinement (4) est un récipient de service où le thé infusé est stocké.
